# EUROPÄISCHE PATENTANMELDUNG

(11) **EP 2 957 684 A1**
(43) Veröffentlichungstag der Anmeldung: **23.12.2015**
(21) Anmeldenummer: 15172711.2
(22) Anmeldetag: 18.06.2015
(51) Int. Cl.: E04B 1/58

(54) **TRAGWERK UND VERFAHREN ZUM ZUSAMMENBAU EINES KNOTENS IN EINEM TRAGWERK**

(30) Priorität: 18.06.2014 DE 102014108562
(71) Anmelder: SCHÜCO International KG, 33609 Bielefeld (DE)
(72) Erfinder: PLUNTKE, Robert, 32791 Lage (DE)
(74) Vertreter: Specht, Peter

(57) **Zusammenfassung**

Ein Tragwerk, insbesondere für eine Fassade, umfasst mindestens ein Knotenelement (5) mit mindestens zwei Armen (6), wobei auf mindestens einem Arm (6) ein Tragprofil (8) aufgeschoben ist, wobei an dem mindestens einem Arm (6) eine Zentrierhülse (1) festgelegt ist, die zur Ausrichtung und Positionierung eines Tragprofils (8) dient.

## Beschreibung

Die vorliegende Erfindung betrifft ein Tragwerk, insbesondere für eine Fassade, bestehend aus mindestens einem Knotenelement mit mindestens zwei Armen, wobei auf mindestens einem Arm ein Tragprofil aufgeschoben ist, sowie ein Verfahren zum Zusammenbau eines Knotens in einem Tragwerk.

Bei Gebäuden, gerade bei Geschäftshäusern und/oder Hochhäusern, ist die Fassade ein gestalterisches Element des Gebäudes. In der modernen Architektur haben sich neben streng geometrischen Gestaltungen auch unregelmäßige, sog. parametrische oder gar biomorphe Strukturen etabliert. Bei derartigen Tragwerken treffen in den Stoßpunkten mindestens zwei Tragprofile, in der Regel drei oder vier Profile, unter einem Winkel zusammen, die über Schweißverbindungen miteinander verbunden werden.

Das Gewicht, aber auch die Materialkosten bedingen oft geringe Wandstärken. Wird Kunststoff oder Aluminium verwendet, ist das Schweißen durch die unterschiedlichen Anschnitte der Profile, die Gehrungen oder Schifterschnitte schwierig. Zwar werden dann Aussteifungen in Form von Ecken und/oder Knotenelemente eingebracht, aber das Ausrichten und Verschweißen mehrerer gerade unter Schifterschnitt gefertigter Tragprofile erweist sich im Allgemeinen als fehleranfällig, wobei diese Verbindungen dann nicht als statisch tragend bewertet werden können.

Werden die Knotenelemente biegesteif und belastbar ausgelegt, übernehmen sie die statische Funktion. Im Nachhinein werden Tragprofile über die vorgefertigten Knotenelemente geschoben und mit Hilfe von Schrauben oder Schweißnähten, wobei auch Zierschweißnähte zum Einsatz kommen, fixiert.

Bei derzeitigen Knotenlösungen sind die Außenrohre mit Bohrungen für Schweiß- oder Schraubverbindungen versehen. Die Toleranzen der Rohre gerade im Durchmesser sind eng bemessen. Kommt es zu Übermaßpassungen, auch Presspassungen genannt, so erfordert die Montage Kraft und Zeit. Außerdem wird es schwierig die einzelnen Tragprofile genau aneinander auszurichten. Werden keine Presspassungen verwendet, haben die Tragprofile beim Fügen und Fixieren Spiel, was ebenfalls zu Ungenauigkeiten des Aufbaus führen kann.

Aufgabe der Erfindung ist es, ein Tragwerk zu entwickeln, bei dem die Tragprofile einfach mit den Knotenelementen gefügt werden können und die Verbindung dabei spielfrei ist. Zudem soll ein einfaches Verfahren zum Zusammenbau eines Knotens für ein Tragwerk bereitgestellt werden.

Die Lösung der Aufgabe erfolgt durch ein Tragwerk mit den Merkmalen des Anspruches 1 und ein Verfahren mit den Merkmalen des Anspruches 13.

Das Tragwerk, besonders für eine Fassade, besteht aus mindestens einem Knotenelement mit mindestens zwei Armen, wobei auf mindestens einem Arm ein Tragprofil aufgeschoben ist, wobei an dem mindestens einem Arm eine Zentrierhülse festgelegt ist, die zur Ausrichtung und Positionierung eines Tragprofils dient. Dadurch wird die Montage und die Ausrichtung der Tragprofile vereinfacht, so dass ein stabiles Tragwerk bereitgestellt wird.

Vorteilhafte Ausgestaltungen sind Gegenstand der abhängigen Ansprüche.

Bei der im Tragwerk eingesetzten Zentrierhülse ist ein zentraler Hohlkörper vorgesehen. An einem Ende des zentralen Hohlkörpers ist eine Befestigungslasche angeformt. Am anderen, dem hinteren Ende des zentralen Hohlkörpers ist ein an der Außenseite konisch geformtes Endstück angeformt, das als Aufschiebhilfe für das Tragprofil dient. Dadurch lässt sich das Tragprofil einfach auf den Arm mit der Zentrierhülse aufschieben.

In einer bevorzugten Ausführungsform der Zentrierhülse entspricht die Innenfläche des Hohlkörpers zumindest teilweise der Außenfläche des Armes des Knotenelementes und liegt daher mindestens teilweise an. Die Außenfläche des Hohlkörpers entspricht dabei zumindest teilweise der Innenfläche des Tragprofils, so dass auch hier zumindest bereichsweise ein Kontaktfläche vorhanden ist.

Der Einsatz einer Zentrierhülse erleichtert den präzisen Zusammenbau von Tragprofilen mit einem Schweißknoten erheblich. Zwar wird das Knotenelement nach wie vor aus Rohren hergestellt, die auf Gehrung bzw. Schifter geschnitten und anschließend verschweißt werden. Allerdings kann bei diesem Verfahren der Außendurchmesser des Knotenrohres ein größeres Spiel gegenüber dem Innendurchmesser des Tragprofils haben.

Auf die Enden der Arme des Knotenelementes werden vorzugsweise jeweils eine der erfindungsgemäßen Zentrierhülse geschoben und an dem Knotenelement befestigt. Die Zentrierhülse erlaubt ein größeres Spiel zwischen Knotenelement und Tragprofil. Dieses erlaubte Spiel macht es nicht erforderlich, dass die Knotenelemente sehr sorgfältig nachbehandelt werden müssen. So können Schweißnähte bis zu einem gewissen Grad problemlos auftragen, ohne zu stören.

Auf diesen Verbund von Knotenelement und Zentrierhülle werden die vorgefertigten Tragprofile aufgeschoben. Die Tragprofile werden an der Zentrierhülse, an dem Verbund von Zentrierhülse und Knotenelement oder an dem Knotenelement fixiert. Diese Fixierung kann durch Verkleben der Teile miteinander oder wiederlösbar sein, indem das Tragprofil verschraubt wird. Nachträglich können die Tragrohre miteinander verschweißt werden. Dabei muss diese Verschweißung keine tragende Funktion haben, sondern es ist durchaus denkbar, dass die Verschweißung eine rein optische Funktion hat.

Eine Ausführungsform des Tragwerks besteht darin, dass die verwendete Zentrierhülse so ausgeformt ist, dass die Flächenelemente, die innen der Außenfläche des Knotenelementes entsprechen, groß sind. Sind weiterhin die Flächenelemente der Außenseite entsprechend der Innenfläche des Tragrohres, so kann die Verbindung als Presspassung gesehen werden, bei der die Montage ohne Verklebung erfolgen kann.

In einer weiteren vorteilhaften Ausführungsform, sind in dem zentralen Hohlkörper der verwendeten Zentrierhülse in der Wandung ein oder mehrere Durchbrüche eingebracht, die im zusammengebauten Zustand die unterschiedlichen Materialien arbeiten lassen und/oder Hohlräume bilden, die mit Kleber gefüllt werden können.

In einer anderen Ausführungsform ist zumindest der zentrale Hohlkörper der Zentrierhülse auf der Seite, die der Befestigungslasche gegenüberliegt, geschlitzt. Da bevorzugt für die Zentrierhülse andere Materialien verwendet werden, als für das Knotenelement oder das Tragprofil, kann es bei Wärmeschwankungen zu unterschiedlicher Materialausdehnung kommen. Der Schlitz erlaubt der Zentrierhülse gegenüber dem Knotenelement und gegenüber dem Tragprofil zu arbeiten, ohne den Verbund zu zerstören.

In einer weiteren Ausführungsform sind in dem zentralen Hohlkörper der Zentrierhülse runde Öffnungen. Diese Öffnungen sind bevorzugt kollinear mit der Befestigungslasche eingebracht. Diese Öffnungen können als Befestigungshilfe dienen, um die Zentrierhülse an dem Knotenelement zu befestigen, das Tragprofil an der Zentrierhülse, das Tragprofil an dem Knoten oder das Tragprofil an der Zentrierhülse und dem Knotenelement. Auch können die Öffnungen dazu genutzt werden, um Kleber letztendlich zwischen das Tragprofil und dem Knotenelement zu bringen. Die Öffnungen können auch zu beidem genutzt werden, insbesondere dann, wenn ein Klebergrundstoff eingebracht wird, der erst nach dem Verschrauben aktiviert wird und zu einer weiteren Stabilisierung der Verbindung beiträgt.

In einer weiteren bevorzugten Ausführung ist zumindest in dem zentralen Hohlkörper der Zentrierhülse mindestens ein Kleberkanal eingebracht. Der Kleberkanal dient dazu, eingebrachten Kleber von einer Klebereingabestelle in möglichst alle Hohlräume zu leiten und diese letztendlich auszufüllen. Bevorzug sind eine größere Anzahl von Kleberkanälen, damit der Kleber unmittelbarer von der Klebereingabestelle den Hohlräumen zugeführt werden kann.

In einer weiteren bevorzugten Ausführungsform sind an den Enden des zentralen Hohlkörpers der Zentrierhülse Dichtmanschetten angebracht. Diese Dichtmanschetten sollen den zentralen Hohlraum gegenüber den teilweise offenen Bereichen neben diesem zentralen Hohlraum im zusammengebauten Zustand abdichten. Sie sollen verhindern, dass Kleber unkontrolliert in quasi ungeschlossene Räume austritt und somit nicht wirken kann. Diese Dichtmanschetten können aus weichem oder hartem Material bestehen. Sie können ähnlich den Dichtlippen oder wie bei einseitig abgedichtete Kugellager ausgeformt sein. In einer weiteren Ausführungsform kann diese Dichtmanschette als weiteres Bauteil, wie z.B. einem O-Ring ausgeführt sein. Bevorzugterweise ist die Form und das Material der Dichtmanschette auf den Kleber abgestimmt.

Um einen Abrieb an dem Knotenelement oder dem Tragprofil zu vermeiden, sollte das Material, aus dem die Zentrierhülse hergestellt wird, höchstens die gleiche, besser sogar eine geringere Härte besitzen als die eines Knotenelementes und/oder der eines Tragprofils. Bevorzugt ist das Material der Zentrierhülse weicher als das der anderen beiden Materialien. Bevorzugt ist die Zentrierhülse gefertigt aus Kunststoff, Metall, aus Glasfaser-verstärktem Kunststoff oder aus einem Verbund von beidem.

Eine Verbindung ist in der Regel stabil, wenn die Teile passgenau gefügt werden. Die Kraftaufwendung bei der Schaffung einer solchen Verbindung ist dabei in der Regel hoch. Eine große Stabilität wird aber auch erreicht, wenn die Teile im Querschnitt zumindest geometrisch ähnlich geformt sind. So ist eine große Stabilität bei einer Verbindung von einem Knotenelement mit einem Tragprofil durch Verwendung einer Zentrierhülse zu erwarten, wenn die Zentrierhülse wie auch das Knotenende und das Tragprofil einen geometrisch ähnlichen Querschnitt haben. In einer bevorzugten Ausführungsform ist dieser Querschnitt rund, in einer anderen bevorzugten Ausführungsform oval und in einer weiteren bevorzugten Ausführungsform ist er rechteckig. Denkbar ist allerdings auch, dass die Zentrierhülse auch als Übergangsstück gesehen werden kann, bei dem mittels der Zentrierhülse von einem runden Knotenende zu einem rechteckigen Tragprofil übergegangen wird, oder umgekehrt von einem eckigen Knotenende auf ein rundes Tragprofil.

Ein Knoten in einem erfindungsgemäßen Tragwerk wird nach folgenden Schritten zusammengebaut:
- Bereitstellen eines Knotenelementes, wobei das Knotenelement über mehr als einem Arm verfügt,
- Aufschieben mindestens einer Zentrierhülse auf mindestens einem der Arme,
- Befestigen der mindestens einen Zentrierhülse an dem Knotenelement,
- Aufschieben von mindestens einem vorgefertigten Tragprofils auf den mindestens einen Arm mit der mindestens einen Zentrierhülse,
- Fixieren des mindestens einen Tragprofils an der mindestens einen Zentrierhülse und/oder dem Knotenelement.

Die Erfindung soll im Folgenden anhand einiger Figuren näher erläutert werden.
- Figur 1: zeigt einen Knoten eines Tragwerkes mit einem Knotenelement, mindestens einer Zentrierhülse und mindestens einem Tragprofil.
- Figur 2: zeigt eine Ausführungsform einer Zentrierhülse als a) perspektivisch, b) von der Seite und c) von oben.
- Figur 3: zeigt eine andere Ausführungsform einer Zentrierhülse a) von der Seite, b) von oben und c) als Querschnitt.
- Figur 4: zeigt eine dritte Ausführungsform einer Zentrierhülse perspektivisch.

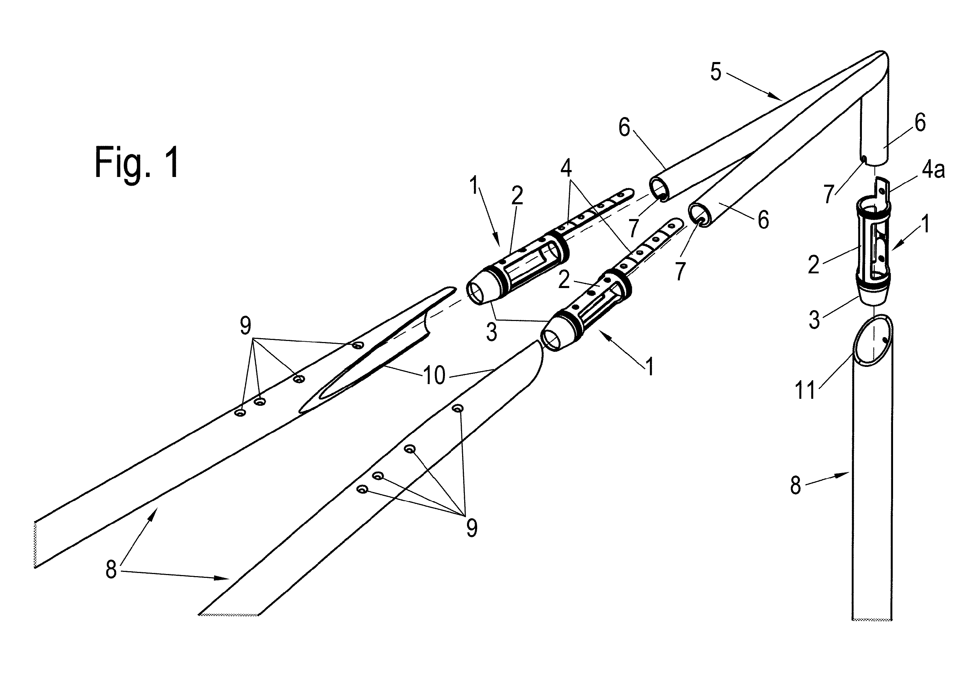

Ein Tragwerk, insbesondere für eine Fassade, wird in der Regel aus einer Vielzahl von Knotenelementen 5 gebildet, die über Tragprofile 8 miteinander verbunden sind. Die Figur 1 zeigt einen solchen Knoten. Das gezeigte Knotenelement 5 hat drei Arme 6. Auf diesen Armen 6 werden die Zentrierhülsen 1 gesteckt. Die Zentrierhülsenl bestehen aus einem zentralen Hohlkörper 2, einem konischen Ende 3 und einer Befestigungslasche 4, wobei eine der Zentrierhülsen 1 (in der Figur am rechten Rand) eine eingekürzte Lasche 4a hat. Hier ist der Arm 6 des Knotenelementes 5 zu kurz, um die Zentrierhülse 1 mit der ganzen Befestigungslasche 4 aufnehmen zu können.

Die Arme 6 haben jeweils eine Ausnehmung 7, in die beim Aufschieben der Zentrierhülse 1 eine Justierhilfe 31 (hier nicht gezeigt) eingreift und die Zentrierhülse 1 so in die vorgegebene Endposition auf dem Arm 6 führt. Auf die Zentrierhülse 1 wird das Tragprofil 8 geschoben. In dem Tragprofil 8 sind einige Öffnungen 9 eingebracht, die zur Justierung, Verschraubung oder Verklebung dienen. Die Tragprofile 8 sind bereits auf Gehrung 11 oder Schifter 10 geschnitten und müssen daher exakt ausgerichtet und dann fixiert werden.

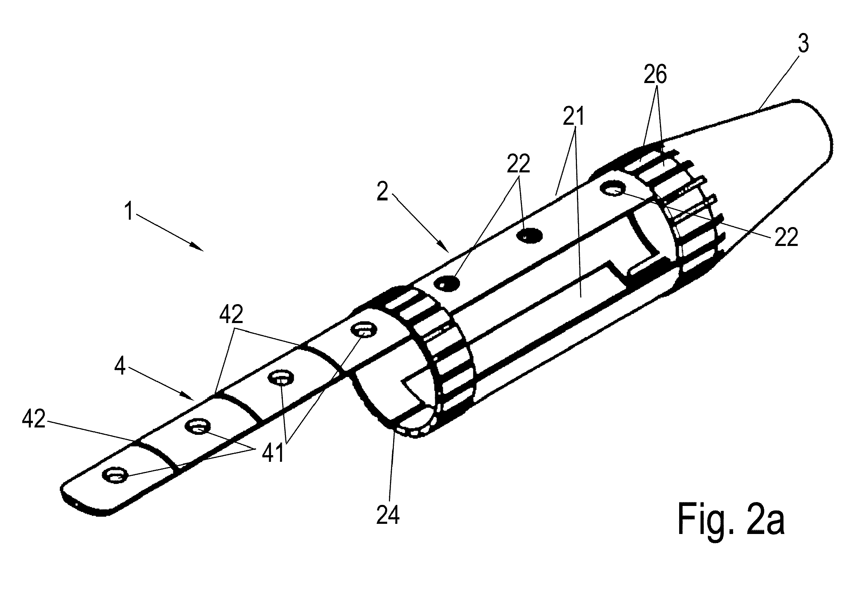

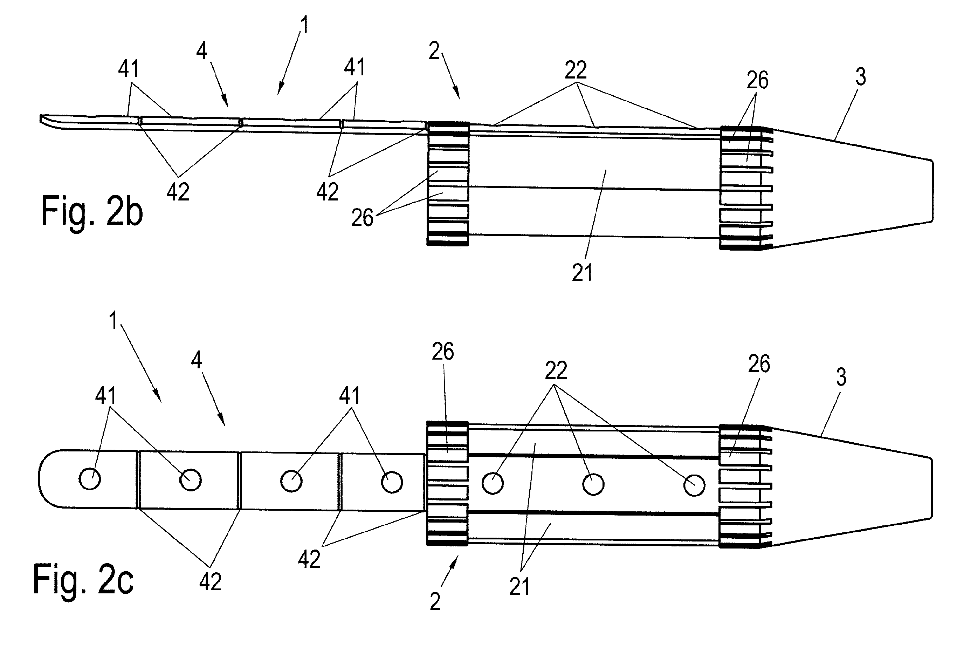

Die Figur 2a zeigt eine Ausführungsform einer in dem Tragwerk verwendeten Zentrierhülse 1 in einer perspektivischen Darstellung. Dieses Ausführungsbeispiel zeigt die Figur 2b von der Seite, die Figur 2c von oben. Gebildet wird die Zentrierhülse 1 aus einem zentralen Hohlkörper 2, der hier zylindrisch ausgeführt ist. Die Wandung dieses zentralen Hohlkörpers 2 hat in diesem Beispiel drei Durchbrüche 21, unten, links oben und rechts oben. Es sind aber auch Ausführungen mit zwei oder mit mehr als drei Durchbrüchen 21 denkbar. Auf dem zwischen den Durchbrüchen 21 verbleibenden Steg-ähnlichen Teil des zentralen Hohlkörpers 2 sind oben, quasi in der Verlängerung der Befestigungslasche 4, Öffnungen 22 eingebracht. Diese Öffnungen 22 dienen als Schraublöcher oder als Klebereinführungsöffnungen. In der Figur 2a ist im unteren Teil des zentralen Hohlkörpers 2 ein Schlitz 24 dargestellt. Dieser Schlitz 24 dient dem leichteren Aufschieben der Zentrierhülse 1 auf das Knotenende 6, aber es ist auch ein Element, das den möglicherweise verschiedenen Materialien von Knotenelement 5, Zentrierhülse 1 und Tragprofil 8 erlaubt, unterschiedliche Wärmeausdehnungen auszugleichen. Der Schlitz 24 erstreckt sich auch durch die ringförmigen Bereiche, an denen Dichtblöcke 26 oder Kontaktblöcke vorgesehen sind.

An einem Ende des zentralen Hohlkörpers 2, in der Figur links, ist eine Befestigungslasche 4 angeformt. Die Befestigungslasche 4 ist mit Schraublöchern 41 versehen, mit denen die Zentrierhülse 1 und/oder das Tragprofil 8 an das Knotenelement 5 geschraubt werden kann.

Wie auf der rechten Seite der Figur 1 gezeigt wird, kann die Befestigungslasche 4 für die Montage zu lang sein, insbesondere wenn der Arm 6 des Knotenelementes 5 recht kurz ausgefallen ist. In diesem Fall muss die Befestigungslasche 4a eingekürzt werden. Zu diesem Zweck kann in die Befestigungslasche 4 eine oder mehrere Sollbruchstellen 42 eingebracht werden, die das Einkürzen erleichtern.

An dem anderen Ende des zentralen Hohlkörpers 2, in der Figur 2 auf der rechten Seite, ist ein Endstück 3 angeformt. Die äußere Form des Endstücks ist konisch und dient als Hilfe zum Aufschieben des Tragprofils 8.

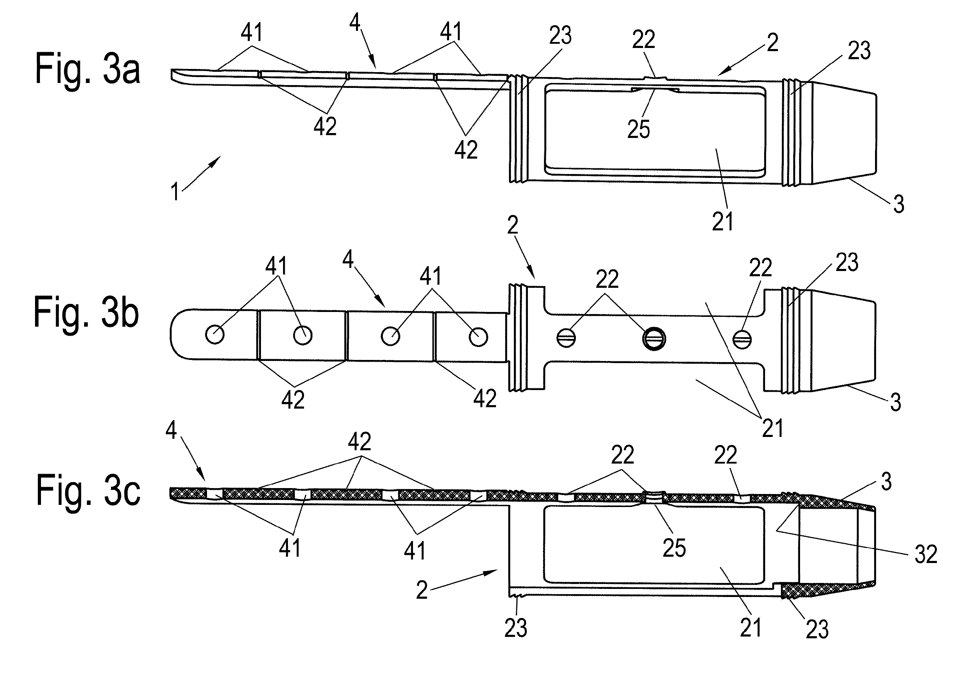

Eine weitere Ausführung der Zentrierhülse 1 ist in der Figur 3 dargestellt, die die Zentrierhülse 1 in Seitenansicht (3a), von oben (3b) und als Schnittbild (3c) zeigt. In dieser Ausführung weist der zentrale Hohlkörper 2 zwei Materialausnehmungen 21 auf. In dieser Ausführungsform sind an den Enden rechts und links des zentralen Hohlkörpers 2 Dichtlippen 23 angeformt, die im zusammengebauten Zustand des Tragwerks den Hohlraum, der vom zentralen Hohlkörper 2, dem Knotenende 6 und dem Tragprofil 8 aufgespannt wird, abdichtet.

In dem oberen Steg-ähnlichen Teil des zentralen Hohlkörpers 2 sind drei Öffnungen 22 eingebracht. Im unteren Bereich der mittleren Öffnung 22 ist eine Aussparung eingebracht, die als Klebekanal 25 dient. Im zusammengebauten Zustand kann durch das Tragprofil 8 und der Öffnung 22 Kleber in den von den Dichtlippen 23 abgedichteten Hohlraum gespritzt werden, der das System stabilisiert.

Die in den Figuren 2b und 2c dargestellten Dichtblöcke 26 haben unter anderem diesselbe Funktion wie die Dichtlippen 23. Sie stabilisieren den Abstand zwischen dem Tragprofil 8 und - speziell den Enden an - dem zentralen Hohlkörper 2. Sie dienen gleichzeitig als Gleithilfe beim Aufschieben des Tragprofils 8 und die Dichtblöcke 26 so durch Form und Materialhärte (Elastizität) gestaltet sind dass sie im eingebauten Zustand einen Durchfluss des in diesem Fall optional einzubringenden Klebers verhindern und den gebildeten Hohlraum abdichten. Die Dichtblöcke können auch klemmen an einer Innenwand des Tragprofils 8 anliegen, so dass durch eine Presspassung die Verbindung nicht zusätzlich verklebt werden muss, aber verklebt werden kann.

In dem zentralen Schnittbild der Figur 3c ist das Material am Schnitt strukturiert gezeigt. Zu erkennen ist, dass der Innendurchmesser des Endstückes 3 geringer ist als der des zentralen Hohlraumes des Hohlkörpers 2. Die dadurch entstandene umlaufende Kante 32 dient als Anschlag für das Aufschieben der Zentrierhülse 1 auf den Arm 6. Am unteren Ende ragt der Anschlag weiter in den zentralen Hohlraum 2 hinein und bildet dort eine Justierhilfe 31, die in eine Ausnehmung 7 des Armes 6 eingefügt wird und so eine vorgegebene Orientierung der Zentrierhülse 1 gewährleistet. In dieser Ausführungsform steht das Ende der Zentrierhülse im zusammengebauten Zustand über den Arm 6 des Knotenelementes 5 heraus und erleichtert das Aufstecken des Tragprofils 8.

Weiterhin zu erkennen ist in der Figur 2a der Schlitz 24 im unteren Bereich des zentralen Hohlkörpers 2. Dieser Schlitz 24 verläuft nicht durchgehend durch den ganzen zentralen Hohlkörper 2, sondern er endet in der Justierhilfe 31.

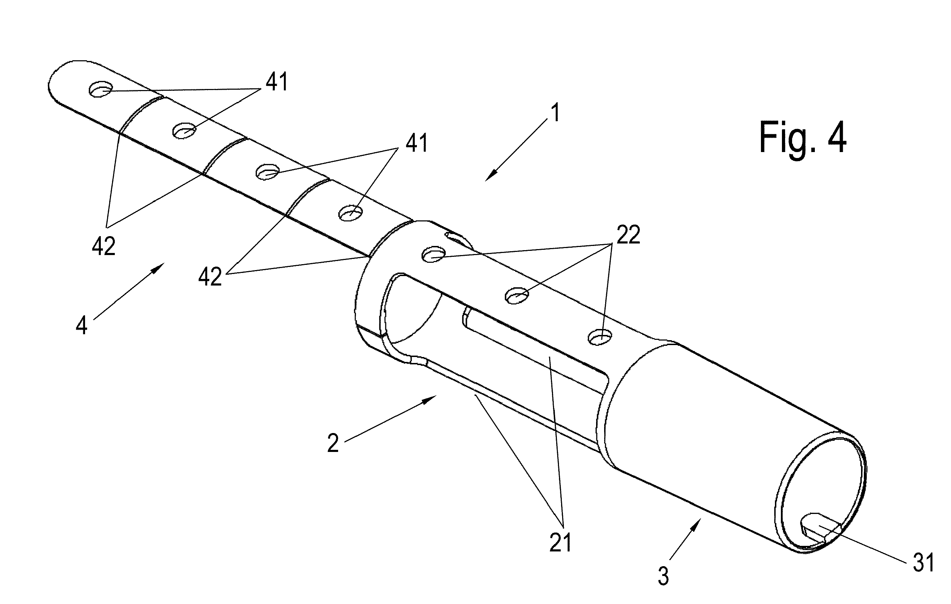

Eine weitere Ausführungsform der Zentrierhülse 1 zeigt die Figur 4. In dieser

Ausführung befindet sich die Justierhilfe 31 am äußeren Ende des Endstücks 3. Beim Zusammenbau schließt die Zentrierhülse 1 mit dem Knotenende 6 ab und bietet schon in der Spitze eine feste Führung beim Aufschieben des Tragprofils 8.

Die in den Figuren gezeigten Ausführungsbeispiele sind lediglich einige Ausführungsbeispiele und schränken die Erfindung nicht ein. So haben beispielsweise alle gezeigten Beispiele einen runden Querschnitt, sowohl bei den Armen 6 wie auch den Zentrierhülsen 1 und den Tragprofilen 8. Denkbar sind auch ovale Querschnitte, ebenso rechteckige oder andere Formen. Auch denkbar ist dass die Querschnitte verschieden sind, so dass es beispielsweise ein rundes Knotenende 6 gibt, auf das ein rechteckiges Tragprofil 8 befestigt werden soll.

### Bezugszeichenliste

- 1: Zentrierhülse
- 2: zentraler Hohlkörper
- 3: Endstück
- 4: Befestigungslasche
- 5: Knotenelement
- 6: Arm
- 7: Ausnehmung
- 8: Tragprofil
- 9: Öffnungen im Tragprofil
- 10: Schiftschnitt
- 11: Gehrungsschnitt
- 21: Materialausnehmung
- 22: Öffnungen
- 23: Dichtlippen
- 24: Schlitz
- 25: Klebekanal
- 31: Justierhilfe
- 32: Kante als Anschlag
- 41: Öffnungen
- 42: Sollbruchstellen

## Patentansprüche

1. Tragwerk, insbesondere für eine Fassade, bestehend aus mindestens einem Knotenelement (5) mit mindestens zwei Armen (6), wobei auf mindestens einem Arm (6) ein Tragprofil (8) aufgeschoben ist,
**dadurch gekennzeichnet, dass**
dass an dem mindestens einem Arm (6) eine Zentrierhülse (1) festgelegt ist, die zur Ausrichtung und Positionierung eines Tragprofils (8) dient.

2. Tragwerk gemäß Anspruch 1, **dadurch gekennzeichnet, dass** die Zentrierhülse (1) einen zentralen Hohlkörper (2) aufweist, dessen Innenfläche zumindest teilweise an der Außenfläche des Knotenendes (6) anliegt und dessen Außenfläche zumindest teilweise an der Innenfläche des Tragprofils (8) anliegt.

3. Tragwerk gemäß einem der Anspruch 2, **dadurch gekennzeichnet, dass** an einem Ende des zentralen Hohlkörpers (2), eine Befestigungslasche (4) angeformt ist, und an dem anderen Ende des zentralen Hohlkörpers (2) ein an der Außenseite konisch geformtes Endstück (3) angeformt ist, das als Aufschiebhilfe für das Tragprofil (8) dient.

4. Tragwerk gemäß einem der Ansprüche 1 bis 3, **dadurch gekennzeichnet, dass** die Wandung der Zentrierhülse (1) im Bereich des zentralen Hohlkörpers (2) mindestens einen Durchbruch (21) aufweist.

5. Tragwerk gemäß einem der Ansprüche 1 bis 4, **dadurch gekennzeichnet, dass** der zentrale Hohlkörper (2) der Zentrierhülse (1) auf der der Befestigungslasche (4) gegenüberliegenden Seite einen durchgehenden Schlitz (24) aufweist.

6. Tragwerk gemäß einem der Ansprüche 1 bis 5, **dadurch gekennzeichnet, dass** dass im zentralen Hohlkörper (2) der Zentierhülse (1), bevorzugt kollinear mit der Befestigungslasche (4), Öffnungen (22) eingebracht sind, die als Befestigungshilfe und/oder als Injektionsöffnung für ein Klebermittel dienen

7. Tragwerk gemäß einem der Ansprüche 1 bis 6, **dadurch gekennzeichnet, dass** sich am zentralen Hohlkörper (2) der Zentrierhülse (1) mindestens ein Kleberkanal (25) befindet, der den am Kleberzugang (22) eingespritzter Kleber in die Hohlräume verteilt.

8. Tragwerk gemäß einem der Ansprüche 1 bis 7,**dadurch gekennzeichnet, dass** sich an den Enden des zentralen Hohlkörpers (2) der Zentrierhülse (1) Dichtmanschetten (23) angebracht sind.

9. Tragwerk gemäß einem der Ansprüche 1 bis 8, **dadurch gekennzeichnet, dass** sich am Endstück (3) der Zentrierhülse eine Justierhilfe (31) befindet, die über die Innenabmessungen hinaus in den vom Endstück (3) aufgespannten Raum ragt.

10. Tragwerk gemäß einem der Ansprüche 1 bis 9, **dadurch gekennzeichnet, dass** die Zentrierhülse (1) aus einem Material gefertigt ist, dessen Härte geringer ist als die eines Knotenelementes (5) und/oder der eines Tragprofils (8).

11. Tragwerk gemäß Anspruch 10, **dadurch gekennzeichnet, dass** die Zentrierhülse (1) aus Kunststoff, Metall und/oder aus Glasfaser-verstärktem Kunststoff gefertigt ist.

12. Tragwerk gemäß einem der Ansprüche 1 bis 11, **dadurch gekennzeichnet, dass** die Zentrierhülse (1) und/oder das Knotenende (6) und das Tragprofil (8) einen rohrförmigen Querschnitt aufweisen.

13. Verfahren zum Zusammenbau eines Knotens in einem Tragwerk, bestehend aus folgenden Schritten:
a. Bereitstellen eines Knotenelementes (5), wobei das Knotenelement (5) über mehr als einen Arm (6) verfügt,
b. Aufschieben mindestens einer Zentrierhülse (1) auf mindestens einem der Arme (6),
c. Befestigen der mindestens einen Zentrierhülse (1) an dem Knotenelement (5),
d. Aufschieben von mindestens einem vorgefertigten Tragprofil (8) auf den mindestens einen Arm (6) mit der mindestens einen Zentrierhülse (1),
e. Fixieren des mindestens einen Tragprofils (8) an der mindestens einen Zentrierhülse (1) und/oder dem Knotenelement (5).

14. Verfahren zum Zusammenbau eines Knotens in einem Tragwerk nach Anspruch 13, **dadurch gekennzeichnet, dass** die Zentrierhülse mit dem Tragprofil (8) und dem Arm (6) verklebt wird.
